# EUROPÄISCHE PATENTSCHRIFT

(11) **EP 2 878 963 B1**
(45) Veröffentlichungstag und Bekanntmachung des Hinweises auf die Patenterteilung: **23.11.2022**
(21) Anmeldenummer: 13194784.8
(22) Anmeldetag: 28.11.2013
(51) Int. Cl.: G01R 27/08, G01R 27/14, G01R 27/16, H02M 3/00

(54) **Verfahren zum Betreiben einer Schaltungsanordnung, umfassend ein Schaltnetzteil und einen Verbraucher**
Method for operating a circuit arrangement, comprising a switched mode power supply and a consumer
Procédé de fonctionnement d'un agencement de circuit, comportant une alimentation à commutation et un consommateur

(43) Veröffentlichungstag der Anmeldung: 03.06.2015
(73) Patentinhaber: Siemens Aktiengesellschaft, 80333 München (DE)
(72) Erfinder: Eybel, Oliver, 2130 Mistelbach (AT); Zalto, Roland, 1030 Wien (AT)
(74) Vertreter: Maier, Daniel Oliver

(56) Entgegenhaltungen:
- EP-A1- 2 249 468
- EP-A2- 2 418 763
- DE-A1-102007 059 365
- DE-U1- 29 720 533
- GB-A- 2 408 809
- JP-A- H07 194 008
- JP-A- 2003 274 641
- US-A- 6 069 469

## Beschreibung

Die Erfindung betrifft ein Verfahren zum Betreiben einer Schaltungsanordnung, ein Schaltnetzteil und einen Verbraucher umfassend, wobei das Schaltnetzteil über eine Versorgungsleitung zur Versorgung des Verbrauchers mit einer regelbaren Ausgangsspannung eingerichtet ist. Zudem betrifft die Erfindung eine entsprechende Schaltungsanordnung.

Ein Schaltnetzteil wird insbesondere in industriellen Anlagen eingesetzt, um Anlagenteile mit einer konstanten Gleichspannung zu versorgen. Dabei handelt es sich in der Regel um ein getaktetes Schaltnetzteil, welches an ein Wechselspannungsnetz angeschlossen ist.

Die Steuerung eines solchen Schaltnetzteils umfasst eine Regelung, mittels derer die Ausgangsspannung an den Ausgangsanschlüssen des Schaltnetzteils konstant gehalten wird. Durch diese Regelung ändert sich in vorgegebenen Grenzen bei einer geänderten Last nur der Laststrom und die Ausgangsspannung bleibt konstant.

Insbesondere bei hohen Strömen und bei größeren Distanzen zwischen dem Schaltnetzteil und dem angeschlossenen Verbraucher muss der Spannungsabfall der Versorgungsleitung berücksichtigt werden.

Beispiel für Dokumente zum Stand der Technik: EP 2 418 763 A2 und GB2408809

Nach dem Stand der Technik umfasst ein Schaltnetzteil zur Berücksichtigung dieses Spannungsabfalls ein Potentiometer. Mit Hilfe dieses Potentiometers wird bei einer Inbetriebnahme die Ausgangsspannung so justiert, dass am Verbraucher die gewünschte Verbraucherspannung anliegt. Nachteilig ist dabei der Umstand, dass Änderungen des Laststromes auf diese Weise nicht berücksichtigt werden.

Der Erfindung liegt die Aufgabe zugrunde, für ein Verfahren bzw. eine Schaltungsanordnung der eingangs genannten Art eine Verbesserung gegenüber dem Stand der Technik anzugeben.

Erfindungsgemäß wird diese Aufgabe gelöst durch die Merkmale von Anspruch 1. Den abhängigen Ansprüchen sind verbesserte Ausführungsformen entnehmbar.

Dabei wird einer Steuerung des Schaltnetzteils der elektrische Widerstand der Versorgungsleitung vorgegeben, wobei die Ausgangsspannung des Schaltnetzteils unter Berücksichtigung des elektrischen Widerstands in der Weise geregelt wird, dass eine am Verbraucher anliegende Versorgungsspannung konstant bleibt. Damit ist sichergestellt, dass die am Verbraucher anliegende Verbraucherspannung auch bei starken Laständerungen und bei einer langen Versorgungsleitung konstant bleibt. Der Spannungsabfall der Versorgungsleitung wird also immer vollständig kompensiert, auch wenn sich die Lastaufnahme des Verbrauchers ändert.

Weiterhin ist vorgesehen, dass für die Schaltungsanordnung ein Messbetriebszustand eingerichtet ist, während dem mittels eines Messmoduls der elektrische Widerstand der Versorgungsleitung ermittelt und der Steuerung des Schaltnetzteils übermittelt wird. Dieser Messbetriebszustand wird entweder durch ein Bedienpersonal oder automatisiert bei der Inbetriebnahme oder in vorgegeben Intervallen herbeigeführt. Durch Wiederholung des Messbetriebszustands ist auch eine Änderung des elektrischen Widerstands der Verbindungsleitung erfassbar. Von Bedeutung ist dies bei starken Temperaturschwankungen oder bei Kabelanschlüssen, deren Leitfähigkeit nachlässt.

Durch den Einsatz des Messmoduls wird zudem ein Spannungs-Potentiometer des Schaltnetzteils überflüssig. Selbst bei einem großen Ausgangsspannungsbereich ist das Schaltnetzteil mithilfe des Messmoduls optimal für die jeweilige Anwendung konfigurierbar.

Von Vorteil ist das Verfahren insbesondere dann, wenn dem Schaltnetzteil ein sogenanntes Diagnosemodul zur Aufteilung eines Laststromes auf mehrere Teillastströme zur Versorgung mehrerer Verbraucherzweige nachgeschaltet ist. Ermittelt werden dann die elektrischen Widerstände der einzelnen Versorgungsleitungen, die vom Diagnosemodul zu den einzelnen Verbrauchern führen. Das Diagnosemodul übernimmt dann das Ausregeln der Ausgangsspannung in Abhängigkeit der Leitungswiderstände der einzelnen Kanäle, sodass an jedem Verbraucher eine konstante Verbraucherspannung anliegt. Darüber hinaus überwacht das Diagnosemodul die einzelnen Kanäle und regelt bei drohender Überlast ab.

Die Erfindung wird nachfolgend in beispielhafter Weise unter Bezugnahme auf die beigefügten Figuren erläutert. Es zeigen in schematischer Darstellung:
- Fig. 1: Schaltnetzteil mit internem Messmodul zur Erfassung einer Kurzschlussspannung
- Fig. 2: Anordnung mit separatem Messmodul
- Fig. 3: Anordnung mit Diagnosemodul und separatem Messmodul
- Fig. 4: Schaltnetzteil mit Speichereinheit zur Auswahl unterschiedlicher Leitungsparameter

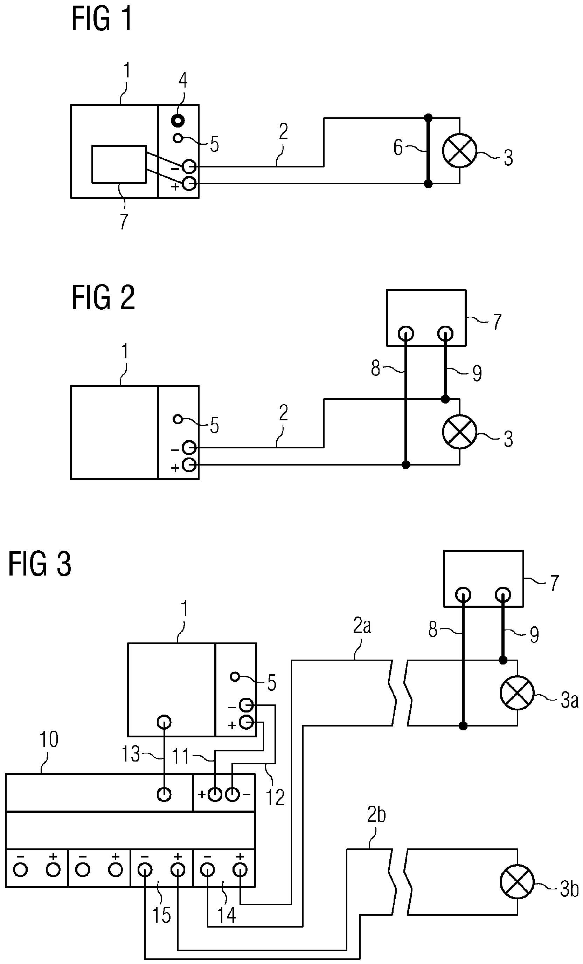

Die Anordnung gemäß Fig. 1 umfasst ein Schaltnetzteil 1 mit zwei Anschlüssen zur Anschaltung einer Verbindungsleitung 2. Mit einem positiven Abschnitt und einem negativen Abschnitt der Verbindungsleitung 2 ist das Schaltnetzteil 1 mit einem Verbraucher 3 verbunden.

Mittels eines Betätigungselements 4 wird das Schaltnetzteil 1 in einen Messbetriebszustand versetzt. Dabei wird die Ausgangsspannung abgeschaltet, was mittels eines geeigneten Anzeigeelements 5 angezeigt wird. In Weiterer Folge wird eine Kurzschlussbrücke 6 aktiviert. Dazu steuert beispielsweise die Steuerung des Schaltnetzteils einen Schalter an, der über eine entsprechende Verschaltung die Versorgungsleitung unmittelbar vor dem Verbraucher kurzschließt. Alternativ dazu kann die Kurzschlussbrücke 6 während des Messbetriebszustands installiert und vor Beendigung des Messbetriebszustands wieder entfernt werden. Im nächsten Verfahrensschritt wird mittels eines im Schaltnetzteil angeordneten Messmoduls 7 die Messung durchgeführt. Das geschieht entweder automatisiert nach Aktivierung der Kurzschlussbrücke 6 oder durch nochmalige Betätigung des Betätigungselements 4. Bei einem konstanten Messstrom wird eine Spannungsmessung durchgeführt und mittels des Ergebnisses der elektrische Widerstand berechnet. Alternativ dazu kann an die kurzgeschlossene Versorgungsleitung eine niedrige konstante Spannung angelegt werden. Dann wird der resultierende Strom für die Bestimmung des elektrischen Widerstands herangezogen.

Nach Deaktivierung bzw. Entfernung der Kurzschlussbrücke 6 wird das Schaltnetzteil 1 wieder vom Messbetriebszustand zurück in den aktiven Betriebszustand versetzt. Das geschieht wieder automatisiert nach erfolgter Messung oder durch nochmalige Betätigung des Bedienelements 4.

Bei der in Fig. 2 dargestellten Schaltungsanordnung erfolgt die Erfassung des elektrischen Widerstands der Versorgungsleitung 2 im laufenden Betrieb. Das Messmodul 7 ist dabei unmittelbar vor dem Verbraucher 3 mittels zweier Leitungen 8, 9 an den positiven und an den negativen Abschnitt der Versorgungsleitung 2 angeschlossen. Versorgt wird das Messmodul 7 dabei direkt vom Schaltnetzteil 1. Es benötigt somit keine eigene Energieversorgung. Zwischen Messmodul 7 und Schaltnetzteil 1 besteht beispielsweise eine Funkverbindung (z. B. Bluetooth, ISM-Band, WIFI oder Mobilnetz) zum Datenaustausch. Eine andere Möglichkeit zur Datenübertragung besteht darin, dass die mittels Verbindungsleitung 2 übertrage Last durch codierte Stromänderungen variiert wird. Auch eine Modulation von Daten auf der Versorgungsspannung (bei AS-i) ist möglich.

Die Messung des elektrischen Widerstands der Verbindungsleitung 2 erfolgt entweder wieder durch Aktivierung eines Kurzschlusses oder durch eine Spannungsmessung.

Im ersten Fall signalisiert das Messmodul 7 dem Schaltnetzteil 1 seine Bereitschaft zum Auslösen eines Kurzschlusses. Nachdem das Schaltnetzteil 1 die Versorgungsleitung 2 spannungsfrei geschaltet hat, wird ein Kurzschluss erzeugt. In weiterer Folge wird wie oben beschrieben die Spannung bei konstantem Messstrom oder der Strom bei konstanter Messspannung gemessen.

Im zweiten Fall führt das Messmodul 7 eine Spannungsmessung am Verbraucher 3 durch und übermittelt das Ergebnis an das Schaltnetzteil 1. Dabei ist das Schaltnetzteil 1 zur Berechnung des elektrischen Widerstandes der Verbindungsleitung 2 auf Basis der Spannungsdifferenz und des Stromes eingerichtet. Günstigerweise umfasst das Schaltnetzteil 1 zu diesem Zweck einen Mikrocontroller, der gleichzeitig als Steuerung des Schaltnetzteils 1 fungiert.

Eine vorteilhafte Weiterentwicklung sieht vor, dass mittels des Messmoduls 7 die gewünschte Spannung am Verbraucher 3 einstellbar ist. In diesem Fall wird zusätzlich ein Spannungssollwert vom Messmodul 7 an das Schaltnetzteil gesendet.

Des Weiteren ist es von Vorteil, wenn der maximal ausregelbare Verbraucherstrom und die Leitungsverluste mittels Schaltnetzteil 1 berechnet und an das Messmodul 7 übermittelt werden.

Der Einsatz des Messmoduls 7 ist nur solange erforderlich, solange eine Erfassung des Leitungswiderstands durchgeführt wird. Dasselbe Messmodul 7 kann deshalb für verschiedene Schaltanordnungen oder bei Einsatz eines Diagnosemoduls 10 für verschiedene Lastzweige genutzt werden.

Den Einsatz eines Messmoduls 7 bei einer Anordnung mit Diagnosemodul 10 ist in Fig. 3 dargestellt. Dabei ist das Diagnosemodul 10 über eine positive Leitung 11 und eine negative Leitung 12 an das Schaltnetzteil 1 angeschlossen. Diese Leitungen 11, 12 sind dabei so kurz, dass der auftretende Spannungsabfall vernachlässigbar ist. Zudem besteht eine Verbindung zum Datenaustausch über eine Datenleitung 13. Über diese Datenleitung 13 kann das Diagnosemodul 10 beispielsweise mehr Spannung anfordern.

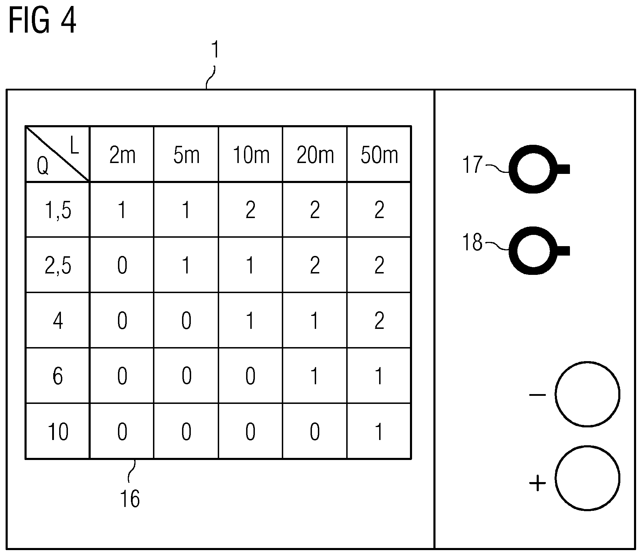

Das Diagnosemodul 10 wird hier zum Regeln der Verbraucherspannung verwendet. Im gezeigten Beispiel ist an zwei der vier Ausgänge 14, 15 des Diagnosemoduls 10 jeweils über eine Versorgungsleitung 2a, 2b ein Verbraucher 3a, 3b angeschlossen. Zur Ermittlung des elektrischen Widerstands der jeweiligen Versorgungsleitung 2a, 2b kommt wieder ein separates Messmodul 7 zum Einsatz. Dieses kommuniziert nicht mit dem Schaltnetzteil 1, sondern mit dem Diagnosemodul 10. Ansonsten entspricht das Verfahren dem oben beschriebenen. Eine einfache Ausprägung der Erfindung ist in Fig. 4 dargestellt. Das Schaltnetzteil 1 umfasst dabei eine Speichereinheit 16 und Bedienregler 17, 18.

Mittels der Bedienregler 17, 18 wird zunächst die Länge L und der Querschnitt Q einer angeschlossenen Versorgungsleitung eingestellt. Der Übersichtlichkeit halber sind im dargestellten Beispiel in der Speichereinheit 16 den verschiedenen Längen L und den verschiedenen Querschnitten Q nur drei resultierende Widerstandskennungen von 0 bis 2 zugeordnet. Die Skalierung entspricht dabei den möglichen Einstellwerten der Bedienregler 17, 18. Dabei handelt es sich zwar um eine grobe Abschätzung, jedoch sind bei einfachen Anwendungen auch damit zufriedenstellende Resultate zu erzielen. Anhand der Widerstandskennungen wird dem Schaltnetzteil 1 der elektrische Widerstand der angeschlossenen Versorgungsleitung 2 vorgegeben. Das Schaltnetzteil 1 gleicht dann den Spannungsabfall auf der Verbindungsleitung 2 zum Verbraucher aus.

Eine höhere Genauigkeit bei der Widerstandsvorgabe erhält man mit einer feineren Skalierung der einstellbaren Länge L und des Querschnitts Q der angeschlossenen Versorgungsleitung 2, wobei etwa zehn oder mehr verschiedene Widerstandskennungen zugeordnet sind.

Die Speichereinheit 16 entfällt, wenn nicht die Länge L und der Querschnitt Q mittels eines Bedienreglers eingestellt werden, sondern wenn ein Bedienregler unmittelbar zur Einstellung des vorzugebenden elektrischen Widerstands der angeschlossenen Versorgungsleitung 2 angeordnet ist. Die Einstellskala eines solchen Bedienreglers zeigt dann beispielsweise Widerstandskennungen. Die Zuordnung dieser Widerstandskennungen zu einer konkreten Länge L und einem konkreten Querschnitt Q erfolgt dann zum Beispiel mittels einer Tabelle, die auf einem Gehäuse des Schaltnetzteils 1 aufgedruckt ist. Eine weitere Vereinfachung ist gegeben, wenn die Einstellskala selbst mit möglichen Kombinationen von Längen L und Querschnitten Q der angeschlossenen Versorgungsleitung 2 beschriftet ist.

In einer einfachen Ausführung kann es zudem sinnvoll sein, wenn das Schaltnetzteil 1 anstelle eines Mikrocontrollers eine analoge Schaltung umfasst, um die beschriebenen Verfahren durchzuführen. Beispielsweise ist in einer solchen analogen Schaltung ein einstellbarer Widerstand integriert, welcher den Widerstandswert der Versorgungsleitung 2, 2a, 2b nachbildet.

## Patentansprüche

1. Verfahren zum Betreiben einer Schaltungsanordnung, ein Schaltnetzteil (1) und einen Verbraucher (3, 3a, 3b) umfassend, wobei das Schaltnetzteil (1) über eine Versorgungsleitung (2, 2a, 2b) zur Versorgung des Verbrauchers (3, 3a, 3b) mit einer regelbaren Ausgangsspannung eingerichtet ist, wobei einer Steuerung des Schaltnetzteils (1) der elektrische Widerstand der Versorgungsleitung (2, 2a, 2b) vorgegeben wird und die Ausgangsspannung des Schaltnetzteils (1) unter Berücksichtigung des elektrischen Widerstands in der Weise geregelt wird, dass eine am Verbraucher (3, 3a, 3b) anliegende Versorgungsspannung konstant bleibt, wobei die Schaltanordnung in einen Messbetriebszustand versetzt wird, während dem mittels eines Messmoduls (7) der elektrische Widerstand der Versorgungsleitung (2, 2a, 2b) ermittelt und der Steuerung des Schaltnetzteils (1) übermittelt wird, wobei während des Messbetriebszustands ein konstanter Messstrom oder eine konstante Messspannung ausgegeben wird und der elektrische Widerstand der Versorgungsleitung (2, 2a, 2b) mittels dieses konstanten Messstroms oder mittels dieser konstanten Messspannung berechnet wird, **dadurch gekennzeichnet, dass** die Schaltungsanordnung mittels eines Betätigungselements (4) in den Messbetriebszustand versetzt wird, dass während des Messbetriebszustands die Versorgungsleitung (2, 2a, 2b), deren elektrischer Widerstand ermittelt wird, zuerst spannungsfrei geschaltet und dann mittels einer Kurzschlussbrücke (6) kurzgeschlossen wird, und dass nach erfolgter Messung die Kurzschlussbrücke (6) deaktiviert und das Schaltnetzteil mittels nochmaliger Betätigung des Betätigungselements (4) wieder in einen aktiven Betriebszustand versetzt wird.

2. Verfahren nach Anspruch 1, **dadurch gekennzeichnet, dass** dem Schaltnetzteil (1) ein sogenanntes Diagnosemodul (10) zur Aufteilung eines Laststromes auf mehrere Teillastströme zur Versorgung mehrerer Verbraucherzweige nachgeschaltet ist.

3. Verfahren nach Anspruch 1, **dadurch gekennzeichnet, dass** der Steuerung ein Querschnitt und eine Länge der Versorgungsleitung (2, 2a, 2b) vorgegeben werden und dass aus einer Speichereinheit (16), in der Werte für den elektrischen Widerstand in Abhängigkeit verschiedener Querschnitte (Q) und verschiedener Längen (L) abgespeichert sind, der entsprechende Wert des elektrischen Widerstands der Versorgungsleitung (2, 2a, 2b) abgerufen wird.

## Claims

1. Method for operating a circuit arrangement, comprising a switched-mode power supply (1) and a consumer (3, 3a, 3b), wherein the switched-mode power supply (1) is configured to supply the consumer (3, 3a, 3b) with a regulatable output voltage via a supply line (2, 2a, 2b), wherein the electrical resistance of the supply line (2, 2a, 2b) is predefined for a controller of the switched-mode power supply (1) and the output voltage of the switched-mode power supply (1) is regulated while taking into consideration the electrical resistance in such a manner that a supply voltage applied to the consumer (3, 3a, 3b) remains constant, wherein the circuit arrangement is shifted into a measurement operating state, during which by means of a measurement module (7) the electrical resistance of the supply line (2, 2a, 2b) is ascertained and transmitted to the controller of the switched-mode power supply (1), wherein during the measurement operating state a constant measurement current or a constant measurement voltage is output and the electrical resistance of the supply line (2, 2a, 2b) is calculated by means of said constant measurement current or by means of said constant measurement voltage, **characterised in that** the circuit arrangement is shifted into the measurement operating state by means of a confirmation element (4), that during the measurement operating state the supply line (2, 2a, 2b), the electrical resistance of which is ascertained, switching first takes place without voltage and short-circuiting then takes place by means of a short-circuit bridge (6), and that after measurement takes place the short-circuit bridge (6) is deactivated and the switched-mode power supply is shifted into an active operating state again by means of repeat actuation of the actuation element (4).

2. Method according to claim 1, **characterised in that** what is known as a diagnostics module (10) for dividing a load current into multiple partial load currents for supplying a plurality of consumer branches is connected downstream of the switched-mode power supply (1).

3. Method according to claim 1, **characterised in that** a cross-section and a length of the supply line (2, 2a, 2b) is predefined for a controller and that the corresponding value of the electrical resistance of the supply line (2, 2a, 2b) is retrieved from a storage unit (16), in which values for the electrical resistance are stored as a function of different cross-sections (Q) and different lengths (L).

## Revendications

1. Procédé de fonctionnement d'un agencement de circuit, comportant une alimentation à découpage (1) et un consommateur (3, 3a, 3b), dans lequel l'alimentation à découpage (1) est conçue par l'intermédiaire d'une ligne d'alimentation (2, 2a, 2b) pour l'alimentation du consommateur (3, 3a, 3b) en une tension de sortie réglable, dans lequel la résistance électrique de la ligne d'alimentation (2, 2a, 2b) est prescrite à une commande de l'alimentation à découpage (1) et la tension de sortie de l'alimentation à découpage (1) est réglée avec prise en considération de la résistance électrique de manière à ce qu'une tension d'alimentation s'appliquant au consommateur (3, 3a, 3b) reste constante, dans lequel l'agencement de circuit est amené dans un état de fonctionnement de mesure pendant lequel, au moyen d'un module de mesure (7), la résistance électrique de la ligne d'alimentation (2, 2a, 2b) est déterminée et transmise à la commande de l'alimentation à découpage (1), dans lequel, pendant l'état de fonctionnement de mesure, un courant de mesure constant ou une tension de mesure constante est délivré(e) et la résistance électrique de la ligne d'alimentation (2, 2a, 2b) est calculée au moyen de ce courant de mesure constant ou au moyen de cette tension de mesure constante, **caractérisé en ce que** l'agencement de circuit est amené dans l'état de fonctionnement de mesure au moyen d'un élément d'actionnement (4), **en ce que**, pendant l'état de fonctionnement de mesure, la ligne d'alimentation (2 ,2a, 2b) dont la résistance électrique est déterminée est tout d'abord mise hors tension et ensuite mise en court-circuit au moyen d'un pont de court-circuit (6), et **en ce qu'**après la mesure réussie, le pont de court-circuit (6) est désactivé et l'alimentation à découpage est à nouveau amenée dans un état de fonctionnement actif au moyen d'un nouvel actionnement de l'élément d'actionnement (4).

2. Procédé selon la revendication 1, **caractérisé en ce qu'**en aval de l'alimentation à découpage (1) est branché ce que l'on appelle un module de diagnostic (10) pour la division d'un courant de charge en plusieurs courants de charge partiels pour l'alimentation de plusieurs branches de consommation.

3. Procédé selon la revendication 1, **caractérisé en ce qu'**une section transversale et une longueur de la ligne d'alimentation (2, 2a, 2b) sont prescrites à la commande et **en ce qu'**à partir d'une unité de mémoire (16) dans laquelle sont mémorisées des valeurs pour la résistance électrique en fonction de différentes sections transversales (Q) et de différentes longueurs (L), est récupérée la valeur correspondante de la résistance électrique de la ligne d'alimentation (2, 2a, 2b).
